# NOUVEAU FASCICULE DE BREVET EUROPEEN

(11) **EP 2 550 191 B2**
(45) Date de publication et mention de la décision concernant l'opposition: **26.01.2022**
(45) Mention de la délivrance du brevet: 13.12.2017
(21) Numéro de dépôt: 10722972.6
(22) Date de dépôt: 28.04.2010
(51) Int. Cl.: B61L 27/04, B61L 3/12, B61L 23/04

(54) **MÉTHODE ET SYSTÈME DE GESTION D'ÉVÈNEMENTS PARTICULIERS LIÉS AU DÉPLACEMENT D'UN VÉHICULE GUIDÉ**
VERFAHREN UND VORRICHTUNG ZUM BEHANDELN VON BESONDEREN EREIGNISSEN BEI DER FAHRT EINES SPURGEBUNDENEN FAHRZEUGES
METHOD AND SYSTEM FOR MANAGEMENT OF SPECIAL EVENTS ON A TRIP OF A GUIDED VEHICLE

(30) Priorité: 26.03.2010 EP 10290159
(43) Date de publication de la demande: 30.01.2013
(73) Titulaire: Siemens Mobility S.A.S., 92320 Châtillon (FR)
(72) Inventeur: NOGUEIRA ALVES, Clara, F-92130 Issy Les Moulineaux (FR); EL FASSI, Saïd, F-91270 Vigneux sur Seine (FR)
(74) Mandataire: Siemens Patent Attorneys
(86) Numéro de dépôt international: PCT/EP2010/055740
(87) Numéro de publication internationale: WO 2011/116837

(56) Documents cités:
- EP-A1- 0 849 138
- EP-A1- 0 849 138
- DE-A1- 19 743 306
- DE-A1- 19 743 306
- DE-A1-102007 010 867
- DE-A1-102007 010 867
- US-A1- 2005 091 593
- US-A1- 2005 125 113
- MÜLLER R ET AL: "Deutschlands erste automatische U-Bahn sicher und Zuverlässig im Fahrgastverkehr (Germany's first automated Metro is safe and reliable in passenger operation)", ZEVRAIL - GLASERS ANNALEN, GEORG SIEMENS VERLAG, BERLIN, DE, vol. 134, no. 3, 1 mars 2010 (2010-03-01), pages 86-95, XP001551914, ISSN: 1618-8330

## Description

La présente invention concerne une méthode et un système de gestion d'au moins un évènement particulier pouvant survenir lors d'un déplacement d'un véhicule guidé et en particulier apte à perturber ledit déplacement du véhicule guidé, selon les préambules des revendications 1 et 2.

Par « véhicule guidé », il est fait référence aux moyens de transport en commun tels que des bus, trolleybus, tramways, métros, trains ou unités de train, etc., et aux moyens de transport de charge tel que, par exemple, les ponts roulants, pour lesquels l'aspect sécuritaire est très important et pour lesquels le guidage est assuré par au moins un rail qui définit au moins une ligne ou voie de transport, i.e. au moins un trajet pour ledit moyen de transport.

En particulier, l'invention se rapporte au domaine ferroviaire, notamment aux moyens de transport entièrement automatiques, ainsi qu'aux moyens de transport équipés d'un système de contrôle basé sur une communication à distance, par exemple les trains équipés d'un système de contrôle de trains par radio, communément appelé "Communication Based Train Control" (CBTC). Ladite gestion d'événements particuliers se rapporte notamment à l'intervention d'un personnel d'intervention intervenant lors d'irrégularités de fonctionnement d'un véhicule guidé ou d'une ligne de transport sur le lieu de ladite irrégularité, ou lors de manoeuvres particulières d'un véhicule guidé nécessitant l'intervention d'un personnel adéquat. Ladite intervention vise en particulier à remédier à une indisponibilité temporaire du véhicule guidé ou de la ligne de transport.

La conduite des véhicules guidés automatiques, comme par exemple un métro entièrement automatique, comprend généralement trois sous-systèmes clés. Un premier sous-système, appelé sous-système embarqué, assure un déplacement du véhicule guidé en toute sécurité, ainsi qu'une protection des passagers et du personnel au sol. Un second sous-système, appelé sous-système sol, est apte à localiser le véhicule guidé au cours de son déplacement (localisation terrestre de tous les véhicules guidés en cours de déplacement) et de garantir la sécurité de son déplacement, notamment par rapport au déplacement d'au moins un autre véhicule guidé apte à être lui aussi localisé par ledit sous-système sol. Et finalement un troisième sous-système, appelé sous-système de transmission de données permet une communication permanente entre le véhicule guidé et des équipements fixes, au sol, situés le long d'une voie de transport du véhicule guidé.

Différents modes de conduite peuvent également être utilisés pour la conduite du véhicule guidé en fonction de la situation sur la ligne de transport, du fonctionnement des équipements apte à permettre le déplacement dudit véhicule guidé, mais aussi en fonction de consignations commandées depuis un poste de commande centralisé (PCC). En particulier, un mode de conduite entièrement automatique, appelé aussi « Unattended Train Opération » est le mode de conduite sans conducteur.

Ce mode de conduite sans conducteur, ou conduite automatique, permet notamment d'améliorer la régulation des véhicules guidés en permettant un pilotage du véhicule guidé peu ou prou libre d'une intervention de son conducteur. Ce mode de conduite permet par exemple de définir une vitesse optimale de déplacement dudit véhicule guidé, et d'augmenter ainsi les performances d'une ligne de transport.

Cependant, un tel mode de conduite sans conducteur ne peut pas faire face à tous les évènements pouvant survenir lors de l'utilisation du véhicule guidé. Ainsi, dans certains cas d'événements particuliers que nous aborderons plus tard, un personnel d'intervention, par exemple un conducteur, doit monter à bord du véhicule guidé afin de piloter manuellement ledit véhicule guidé. Cette conduite manuelle du véhicule guidé peut être contrôlée à vitesse plafonnée ou totalement libre, par exemple, en surveillant le comportement du personnel d'intervention. Cette conduite manuelle, à vue, est un mode de conduite dégradé du mode de conduite sans conducteur du véhicule guidé automatique.

La conduite manuelle d'un véhicule guidé apte à fonctionner selon le mode de conduite sans conducteur peut également être utilisée par le personnel d'intervention lors d'autres évènements particuliers intervenant notamment hors du domaine CBTC, par exemple dans une zone atelier, ou sur une voie d'essais du véhicule guidé. Ce mode de conduite manuelle est parfois nécessaire en cas de pannes exceptionnelles. Il permet par exemple de retirer une rame d'une exploitation d'un réseau de voies de véhicules guidés, lorsqu'un défaut interdit une poursuite de la conduite automatique. Il permet également aux rames de traverser des zones où le mode de conduite automatique n'est temporairement plus possible. Dans ces cas, la sécurité du véhicule guidé et de ses occupants ou de son chargement est garantie par le personnel d'intervention présent à bord du véhicule guidé et sur l'application de procédures d'exploitation, faisant par exemple intervenir des échanges avec le PCC.

En particulier, un changement du mode de conduite automatique pour un mode de conduite manuelle est nécessaire dans les situations suivantes correspondant, de manière non restrictive, à des évènements particuliers ou irréguliers pouvant survenir lors d'un déplacement dudit véhicule guidé:
- panne des équipements embarqués d'automatismes;
- panne des équipements fixes d'automatismes gérant un tronçon d'une ligne de transport;
- délocalisation du véhicule guidé, comme par exemple une perte de la localisation d'une position du véhicule guidé dans un référentiel comportant une ou plusieurs positions de véhicule guidé;
- perte de contrôle de boucles sécuritaires du véhicule guidé, par exemple, un défaut de verrouillage des portes du véhicule guidé, ou un choc de l'avant du véhicule guidé contre un obstacle, etc.

De manière générale, un évènement particulier selon la présente invention est un fait aboutissant à une situation nécessitant une intervention externe au véhicule guidé d'un personnel d'intervention sur le lieu de réalisation dudit fait. Le fait peut être par exemple un mauvais fonctionnement d'un des équipements embarqués, aboutissant à une situation de panne du véhicule guidé et nécessitant l'intervention d'un conducteur afin de piloter manuellement ledit véhicule guidé.

Ainsi, les évènements particuliers susmentionnés requièrent actuellement qu'un personnel d'intervention, par exemple un conducteur, soit envoyé sur le lieu où se trouve le véhicule guidé afin de piloter manuellement le véhicule guidé en mode de conduite manuelle. Généralement, la conduite manuelle d'un véhicule guidé par ledit personnel d'intervention se fait à partir d'un des pupitres d'extrémité du véhicule guidé. En fonction de la durée du temps d'intervention du personnel d'intervention, ledit évènement particulier peut conduire par exemple à des perturbations de la fluidité du trafic d'une ligne de transport ou à des incidents plus ou moins graves résultant notamment de l'impatience de passagers décidant de descendre du véhicule guidé. Le document DE 10 2007 010 867 A1 divulgue un véhicule téléguidé depuis un poste de commande. Si les données d'exploitation ne correspondent pas à l'état normal de fonctionnement du véhicule, le véhicule peut être commandé à distance par un opérateur du poste de commande, par exemple afin de le faire sortir d'une situation de danger et l'amener dans une gare, ou jusqu'à un arrêt, ou jusqu'à un atelier.

Un but de la présente invention est de proposer une méthode et un dispositif simple, sûr et fiable, de gestion des évènements particuliers pouvant survenir lors de l'utilisation ou lors du déplacement d'un véhicule guidé et apte à nuire à une disponibilité dudit véhicule guidé ou d'une ligne de transport, ladite méthode et ledit dispositif étant idéalement facilement adaptable à tout type de véhicule guidé par rail.

Un autre but de la présente invention est en particulier de diminuer un temps d'indisponibilité du véhicule guidé ou de la ligne de transport lors d'événements particuliers, voire de remédier à l'indisponibilité du véhicule guidé, tout en conservant le niveau de sécurité dudit véhicule guidé.

Dans ce but, un système et une méthode sont proposés par le contenu des revendications 1 et 2. Un ensemble de sous-revendications présente également des avantages de l'invention.

La présente invention propose, selon revendication 1, une méthode de gestion d'un évènement particulier comprenant une détection d'au moins un évènement particulier capable de perturber un déplacement d'un véhicule guidé (3), et comprenant
- une commutation, commandée à distance, d'un mode de conduite normale à un mode de conduite à distance dudit véhicule guidé lors de la détection dudit évènement particulier;
- une mesure et une collecte, en temps réel, de données de pilotage lors du mode de conduite à distance;
- une communication en temps réel desdites données de pilotage entre un module de pilotage à distance dudit véhicule guidé et un poste de commande à distance; ;
- un traitement, en temps réel, desdites données de pilotage;
- un pilotage manuel en temps réel et à distance dudit véhicule guidé lors du mode de conduite à distance, basé sur desdites données de pilotage,
caractérisée en ce que ladite commutation d'un mode de conduite normale à un mode de conduite à distance est réversible et en ce que des distances d'arrêt identiques entre le mode de conduite normal et le mode de conduite à distance sont conservées en diminuant la vitesse du véhicule guidé dans le mode de conduite à distance de sorte que cette dernière soit égale à V₀-T4·aₘₐₓ, où V₀ est la vitesse du véhicule guidé en mode de conduite normale, aₘₐₓ est la valeur absolue de la décélération maximale du véhicule guidé lors d'un freinage d'urgence, et T4 est un temps de transmission des données de pilotage au poste de commande à distance, et vice versa, et de traitement desdites données de pilotage, la conservation desdites distances d'arrêt identiques étant mise en œuvre par un système de gestion d'événement comprenant ledit module de pilotage à distance et le poste de commande à distance.

La présente invention propose, selon revendication 2, un système de gestion d'événement particulier apte à mettre en œuvre un pilotage à distance d'un véhicule guidé. Le système de gestion d'événement particulier comprend un module de pilotage à distance de véhicule guidé apte à être embarqué à bord du véhicule guidé comprenant un système de pilotage normal destiné au pilotage dudit véhicule guidé, ledit module de pilotage à distance étant apte à coopérer avec le système de pilotage normal dudit véhicule guidé. Le module de pilotage à distance comprend :
- un système de commutation d'un mode de conduite du véhicule guidé, apte à être commandé à distance par un poste de commande à distance, afin de commuter à distance un mode de conduite normal à un mode de conduite à distance;
- un système embarqué de communication, entre le véhicule guidé et le poste de commande à distance, apte à échanger lors du mode de conduite à distance, avec un système de communication dudit poste de commande à distance, des données de pilotage;
- un système embarqué de traitement desdites données de pilotage apte à traiter lesdites données de pilotage afin de permettre un pilotage manuel à distance dudit véhicule guidé lors du mode de conduite à distance;
- des moyens de pilotage à distance dudit véhicule guidé aptes à être commandés manuellement par des moyens de commande du poste de commande à distance lors dudit mode de conduite à distance.

Le système de gestion d'événement particulier comprend également ledit poste de commande à distance du module de pilotage à distance du véhicule guidé. Le poste de commande à distance est apte à commander à distance le pilotage dudit véhicule guidé au moyen dudit module de pilotage à distance, et comprend:
- un dispositif de commande à distance du système de commutation du module de pilotage à distance, ledit système de commutation étant apte à commuter ledit mode de conduite normale audit mode de conduite à distance, lors d'une commande issue dudit dispositif de commande à distance;
- ledit système de communication entre le véhicule guidé et le poste de commande à distance, apte à échanger, lors du mode de conduite à distance, avec ledit système embarqué de communication du module de pilotage à distance dudit véhicule guidé, lesdites données de pilotage;
- un système de traitement desdites données de pilotage du véhicule guidé apte à traiter lesdites données de pilotage;
- lesdits moyens de commande manuelle à distance aptes à commander les moyens de pilotage à distance du module de pilotage à distance du véhicule guidé lors du mode de conduite à distance..

Le système de gestion d'événement particulier selon l'invention est caractérisé en ce que ledit système de commutation est apte à être commandé à distance par ledit poste de commande à distance afin de commuter à distance d'un mode de conduite à distance à un mode de conduite normal lors d'une commande issue dudit dispositif de commande à distance, ledit système de gestion d'événement particulier étant de plus apte à conserver des distances d'arrêt identiques entre le mode de conduite normal et le mode de conduite à distance en diminuant la vitesse du véhicule guidé dans le mode de conduite à distance de sorte que cette dernière soit égale à V₀-T4·aₘₐₓ, où V₀ est la vitesse du véhicule guidé en mode de conduite normale, aₘₐₓ est la valeur absolue de la décélération maximale du véhicule guidé lors d'un freinage d'urgence, et T4 est un temps de transmission des données de pilotage au poste de commande à distance, et vice versa, et de traitement desdites données de pilotage..

En cas d'événements particuliers, tel une panne d'un équipement du véhicule guidé, le système de pilotage normal apte à la mise en oeuvre du mode de conduite normal dudit véhicule guidé est alors incapable de poursuivre le pilotage dudit véhicule. Le mode de conduite normal est en particulier un mode de conduite automatique libre d'une intervention d'un conducteur. Ainsi, en cas de panne, il devient nécessaire de mettre en oeuvre le mode de conduite à distance permettant au personnel d'intervention de piloter manuellement à distance ledit véhicule guidé depuis ledit poste de commande à distance apte à commander le pilotage dudit véhicule au moyen dudit module de pilotage à distance apte à équiper le véhicule guidé. Notons que le système de pilotage normal correspond à l'ensemble des moyens et dispositifs servant à la conduite normale du véhicule guidé, i.e. à la conduite apte à être gérée de manière interne audit véhicule guidé, soit automatiquement gérée par le véhicule guidé et son système de pilotage normal, soit gérée par un conducteur à bord du véhicule guidé, alors que le mode de conduite à distance fait appel à une gestion déportée, ou externe au véhicule guidé, du pilotage du véhicule guidé. La commutation entre l'un ou l'autre des modes de conduite du véhicule guidé étant en particulier commandée depuis le poste de commande à distance. Le pilotage dudit véhicule guidé est alors géré à partir du poste de commande à distance par un personnel d'intervention commandant manuellement et à distance le pilotage du véhicule guidé notamment grâce au moyen de commandes manuelle à distance mis à disposition au poste de commande à distance.

La présente invention permet avantageusement de déporter un poste de conduite du véhicule guidé à un Poste Central de Commande (PCC) intégrant le poste de commande à distance, en conservant un niveau de sécurité correspondant à une conduite manuelle à vue dudit véhicule guidé par un personnel d'entretien à partir d'un poste de conduite à bord dudit véhicule. Cela a l'avantage de limiter les impacts du temps d'intervention sur la disponibilité de la ligne.

La présente invention permet ainsi une conduite à distance d'un véhicule guidé lorsqu'un évènement particulier survient, par une mise en place d'un ensemble de moyens induisant une conduite à distance du véhicule guidé au moins aussi sûre de fonctionnement qu'une conduite avec un personnel d'intervention à bord du véhicule guidé. Selon la présente invention, le système de gestion d'événement particulier est organisé autour de deux sous-systèmes, le module de pilotage à distance embarquable à bord du train et le poste de commande à distance au sol. A bord du véhicule guidé, les moyens de pilotage à distance peuvent par exemple comprendre en particulier des moyens vidéos externe et interne, un déport des surveillances et des commandes du poste de conduite et des moyens audio. Le poste de commande à distance est apte à faire office de poste de conduite déporté. A cette fin, lesdits moyens de commande manuelle à distance sont aptes à être disposés afin de créer à un PCC, un poste de conduite à distance du véhicule guidé similaire au poste de conduite embarqué, en comprenant de plus des moyens audio vidéo.

En particulier, les moyens de pilotages à distances sont aptes à coopérer avec les systèmes embarqués de traitement et de communication afin de garantir une transmission et une réception des commandes et des voyants présents dans la cabine de conduite du véhicule guidé, avec conservation du niveau de sécurité. En outre, les moyens de commande manuelle à distance comprennent des moyens d'aide au pilotage permettant une reconstitution de l'environnement d'une cabine de conduite d'un véhicule guidé, ladite reconstitution étant réalisée par exemple au PCC où est intégré le poste de commande à distance.

Cette reconstitution de l'environnement d'une cabine de conduite d'un véhicule guidé nécessite notamment des moyens audiovisuels spécifiques aptes à équiper les moyens de pilotages à distance. A cette fin, les moyens de pilotages à distance peuvent comprendre des dispositifs de mesure et de collecte de données de pilotage, comme par exemple:
- au moins une caméra de conduite positionnable à chaque extrémité du véhicule guidé, notamment apte à être disposée à l'emplacement de postes de conduite du véhicule guidé;
- au moins une caméra de conduite caractérisée par un angle de champ permettant de recréer le champ de vision d'un conducteur à bord du poste de conduite du véhicule guidé durant une conduite dudit véhicule guidé. En particulier, ledit angle de champ permet avantageusement de visualiser la voie de transport, l'environnement de la voie et la signalisation latérale de la voie de transport;
- au moins une caméra de surveillance située à l'intérieur et/ou à l'extérieur dudit véhicule guidé est apte à permettre une vérification ou une surveillance de l'environnement du véhicule guidé, notamment de l'environnement interne et/ou externe dudit véhicule guidé et de transmettre des informations relatives audit environnement interne. En particulier, ladite caméra de surveillance est apte à transmettre à au moins un écran équipant lesdits moyens d'aide au pilotage, une image permettant une vérification visuelle d'un état d'ouverture ou de fermeture d'une porte du véhicule guidé. Cette vérification visuelle permet par exemple de déterminer la nature d'une alerte de non verrouillage d'une porte du véhicule guidé transmise en tant que donnée relative au pilotage, en différentiant un état d'ouverture de ladite porte d'un défaut de contact de verrouillage. Avantageusement, les moyens d'aide au pilotage des moyens de commande manuel à distance permettent ainsi de vérifier l'environnement interne et externe du véhicule afin d'aider un personnel d'intervention à distance dans son choix de pilotage du véhicule guidé, afin de lui permettre, par exemple, de prendre une décision d'inhiber un défaut de fermeture d'une porte à distance.

Les images prises par lesdites caméras sont en particulier des données de pilotages aptes à être transmises en temps réel auxdits moyens d'aide au pilotage des moyens de commande manuelle à distance. A cette fin, lesdites images peuvent être communiquées en temps réel par le système de communication embarqué, par exemple après traitement par le système embarqué de traitement, au système de communication du poste de commande à distance, qui est apte à transmettre lesdites données de pilotage aux moyens de commande à distance, après les avoir traitées au moyen du système de traitement si nécessaire. Ainsi, les moyens de pilotage à distance sont aptes à comprendre un système de caméras embarquées permettant notamment de vérifier, depuis le poste de commande à distance, un ensemble de points de sécurité devant être acquittés par un personnel d'intervention apte à piloter le véhicule guidé au moyen dudit poste de commande à distance. Les vérifications opérées normalement par le personnel d'intervention présent à bord du véhicule guidé sont ainsi réalisables à distance au moyen desdits moyens de commande manuelle à distance du poste de commande à distance.

De manière générale, les systèmes embarqués de traitement et de communication du module de pilotage à distance, ainsi que les systèmes de communication et de traitement du poste de commande à distance sont aptes à coopérer les uns avec les autres afin de transmettre lesdites données de pilotage, en particulier, du dispositif de commande à distance au système de commutation afin de commuter un mode de conduite du véhicule guidé, et des moyens de pilotage à distance auxdits moyens de commande manuel à distance, et vice versa, afin de permettre le pilotage manuel à distance dudit véhicule guidé. En particulier, les données de pilotage sont aptes à être transmises en temps réel via un réseau de communication entre le véhicule guidé et le sol. A cette fin, le système de communication embarqué et le système de communication du poste de commande à distance sont aptes à échanger lesdites données de pilotage via ledit réseau de communication.

Le module de pilotage à distance est en outre capable d'envoyer au poste de commande à distance des paramètres d'identification du véhicule guidé. Avantageusement, lesdits paramètres d'identification du véhicule guidé permettent au poste de commande à distance d'identifier un ou plusieurs véhicules guidés comprenant chacun un module de pilotage à distance et susceptibles d'être pilotés, à distance, par le même poste de commande à distance. Pour cela, un personnel d'intervention à distance peut sélectionner le véhicule guidé à piloter à distance au moyen d'un dispositif de sélection de véhicules guidés pouvant équiper en particulier les moyens de commande manuelle à distance dudit poste de commande à distance, ou plus précisément un pupitre de commande dudit poste de commande à distance. La sélection dudit véhicule guidé permet de restreindre les données de pilotage communiquées au système de communication du poste de commande à distance aux données de pilotage propres au véhicule guidé sélectionné, et garantit, de même, un transfert desdites données de pilotage du poste de commande à distance, au module de pilotage à distance du véhicule guidé sélectionné, sans confusion possible avec un autre véhicule guidé. Ainsi, des images provenant de caméras embarquées à bord d'un véhicule guidé et reçues au sol correspondent au véhicule guidé sélectionné et commandé. Le système de pilotage selon l'invention est de plus apte à garantir une probabilité d'erreur d'adressage des messages transmis ou reçus d'un niveau SIL 4. Le niveau d'intégrité de sécurité SIL4 (Safety Integrity Level) est défini par la norme IEC 61508 sur la sécurité des systèmes critiques. Il requiert une probabilité d'une défaillance dangereuse par heure comprise entre 10⁻⁸ et 10⁻⁹.

En particulier, les moyens de pilotage à distance du module de pilotage à distance comprennent au moins une caméra de conduite positionnable en fonction d'une composition du véhicule guidé. En effet, la position ou l'emplacement des caméras de conduite dépend de la composition du véhicule guidé, la contrainte étant de toujours avoir une caméra à l'avant du véhicule guidé. Pour un véhicule guidé réversible, les moyens de pilotage comprennent en particulier au moins une caméra de conduite à chaque extrémité du véhicule guidé, alors que pour un véhicule guidé non réversible, les moyens de pilotage comprennent en particulier au moins une caméra à l'avant du véhicule guidé. De plus, les moyens de pilotage comprennent en particulier un moyen de stockage apte à stocker en permanence des images provenant desdites caméras de conduite et de surveillance, afin de permettre, avantageusement, d'analyser le déroulement d'événements particuliers. La durée du stockage desdites images peut en particulier aller de quelques secondes à quelques minutes.

Avantageusement, le dispositif de commande à distance et les moyens de commande manuelle à distance du poste de commande à distance sont en particulier aptes à créer un environnement dédié à la conduite à distance du véhicule guidé, en adoptant une disposition d'éléments nécessaire au pilotage à distance susceptible de créer un poste de conduite déporté similaire au poste de conduite embarqué, situé à l'une ou l'autre des extrémités du véhicule guidé. A cette fin, les moyens de commande manuelle à distance comprennent en particulier les interfaces suivantes:
- un pupitre de commande du véhicule guidé comprenant plusieurs dispositifs, dont une manette de traction/freinage, un bouton de freinage d'urgence et un ensemble des commandes nécessaire à la conduite à distance et qui seront décrites plus loin. L'actionnement de chacun desdits dispositifs du pupitre de commande est apte à être transmis, en temps réel en tant que donnée relative au pilotage, au module de pilotage à distance, afin d'engendrer un résultat identique à un actionnement depuis un poste de commande situé à une des extrémités du véhicule guidé;
- des moyens d'aide au pilotage comprenant notamment des écrans de surveillance permettant de visualiser:
   ∘ une image de la voie de transport à l'avant du véhicule guidé sélectionné ou commandé,
   ∘ une image d'une signalisation en bordure de voie de transport,
   ∘ la vitesse du véhicule guidé,
   ∘ des états du véhicule guidé,
   ∘ une vue synoptique de la ligne de transport du véhicule guidé,
   ∘ une image provenant des caméras de surveillance intérieures au véhicule guidé,
   ∘ un état de la communication des données de pilotage, en particulier caractérisant leur transmission,
- un poste de téléphonie (12).

De plus, l'image ou les images capturées par la caméra de conduite, ou les caméras de conduites, sont aptes à reproduire la vision d'un conducteur de véhicule guidé depuis son poste de conduite. Les caméras de conduite selon l'invention permettent une visualisation de la voie de transport du véhicule guidé sur une distance allant de quelques mètres à au moins 200 mètres à l'avant du véhicule guidé afin de permettre par exemple au personnel d'intervention susceptible de piloter à distance le véhicule guidé d'estimer la nécessité d'un freinage d'urgence.

De manière avantageuse, chaque image transmise par les caméras de conduite ou de surveillance comprennent au moins une information de lieu (numéro du train et de la caméra) et de date. La communication des données de pilotage selon l'invention est réalisée en temps réel. Néanmoins, si un décalage temporel important (p. ex. de l'ordre d'une demi seconde) entre l'affichage de l'image sur un écran pouvant équiper les moyens de commande manuelle à distance et sa capture survient, un module de détection de dysfonctions avantageusement susceptible d'être compris dans les moyens de commande manuel à distance est en particulier apte à signaler au personnel d'intervention ledit décalage. De plus, des problèmes de transmission de l'image capturée par lesdites caméras, résultant par exemple en une image figée, sont de même aptes à être signalés par ledit module de détection de dysfonctions au moyen d'un signal apte à alerter le personnel d'intervention, permettant ainsi avantageusement audit personnel d'intervention de prendre des mesures en conséquence, comme par exemple une activation du freinage d'urgence. De manière générale, le moyen de commande à distance comprend en particulier au moins un module de détection d'une dysfonction d'un affichage d'une image apte à avertir le personnel d'intervention lors de la détection de ladite dysfonction.

Les moyens de pilotage à distance selon l'invention sont en particulier aptes à déporter des commandes manuelles disponibles au poste de conduite dudit véhicule guidé au poste de commande à distance afin que leur fonction soit en particulier transmise au pupitre de commande des moyens de commande manuelle à distance, tout en conservant leur degré de sécurité. En d'autres termes, les fonctions des commandes manuelles du système de pilotage normal du véhicule guidé sont aptes à être déportées du poste de conduite du véhicule guidé au poste de commande à distance dudit véhicule guidé au moyen notamment desdites données de pilotage.

De plus, lesdites données de pilotage comprennent, en plus de données relatives au fonctionnement des commandes manuelles disponibles au poste de conduite dudit véhicule guidé, des données relatives à une image de la voie de transport, de l'environnement interne et externe, et de la vitesse du véhicule guidé, ainsi que d'autres données utiles pour le pilotage manuel à distance du véhicule guidé, tel que:
- l'heure de la prise d'image;
- la localisation de la caméra;
- la vitesse du train;
- l'état de voyants de contrôle de l'état du train;
- des données audio (micro captant l'ambiance sonore à l'avant du train);
- des données sensorielles, comme par exemple des données provenant d'un accéléromètre.

Lesdites données de pilotage sont de plus susceptibles de comprendre des données corrélées à d'autres commandes du pilotage manuel à distance, comme par exemple des données aptes à commander une focale d'une caméra ou un allumage d'un phare spécifique à l'avant du véhicule guidé. En particulier, lesdites données de pilotage comprennent des données transmises du poste de commande à distance audit véhicule guidé, comme par exemple des données aptes à commander la traction du véhicule guidé, le freinage du véhicule guidé, le contrôle des portes du véhicule guidé, des informations phoniques ou visuelles destinées aux passagers dudit véhicule guidé. Lesdites données de pilotage sont ainsi aptes à transmettre des ordres émanant du poste de commande à distance pour le module de pilotage à distance. Lesdites données sont de plus aptes à être codées, par exemple par le système embarqué de traitement et par le système de traitement du poste de commande à distance, afin de parer à toute intrusion susceptible de perturber le pilotage à distance. Les systèmes de communication du poste de commande à distance, et embarqué à bord du module de pilotage à distance, sont de plus capables de transmettre lesdites données par paquets, durant des temps de transmission limités, tout en assurant une faible perte desdits paquets de données de pilotage.

Le système de gestion d'événement particulier selon l'invention est en particulier apte à être dimensionné afin de tenir compte du temps et de la distance nécessaire à un arrêt total du véhicule guidé, notamment en cas de freinage d'urgence. Le dimensionnement du système de pilotage prend en particulier en compte un temps de traitement et de transmission des données de pilotage, un temps de réaction d'un personnel d'intervention, un temps de transmission d'une commande de freinage, et un temps de freinage d'urgence. Le temps nécessaire à l'arrêt total du véhicule guidé conditionne la vitesse maximale à laquelle le véhicule guidé peut rouler dans le mode de conduite à distance afin de ne pas risquer une collision avec un objet ou un autre véhicule guidé. La sécurité des voyageurs, mais également la performance du véhicule guidé dépendent de ce paramètre temporel.

En particulier, si un conducteur se trouve à bord du véhicule guidé, le temps nécessaire à un arrêt total du véhicule guidé est donnée par T_{arrêt} = T1 + T2 + T3, où T1 est le temps de réaction du conducteur lorsqu'il a détecté un obstacle sur la voie de transport, T2 est le temps écoulé entre le moment où le conducteur appuie sur un bouton de freinage d'urgence et une application d'un frein sur des roues du véhicule guidé, et T3 est le temps qui s'écoule entre le début du freinage d'urgence et l'arrêt total du véhicule guidé. T3 dépend notamment de la vitesse du véhicule guidé au début du freinage et de la décélération maximale qui peut être appliquée au véhicule guidé lors d'un freinage d'urgence. Si le conducteur du véhicule guidé ne se trouve pas à bord dudit véhicule, mais qu'un personnel d'intervention pilote à distance ledit véhicule, le temps d'arrêt total du véhicule guidé à distance T_{arrêt-distance} est égal au temps d'arrêt T_{arrêt} avec conducteur sommé à un temps T4 de transmission des données de pilotage au poste de commande à distance, et vice versa, et de traitement desdites données de pilotage. Une partie du temps T4 correspond ainsi au traitement d'images (à bord du véhicule guidé et au poste de commande à distance) et à leurs transmissions et une autre partie dudit temps T4 correspond à la transmission d'une donnée relative au pilotage comprenant une commande de freinage, du poste de commande à distance au module de pilotage à distance et à son traitement.

Le système de gestion d'événement particulier est apte à conserver des distances d'arrêt identiques entre le mode de conduite normal caractérisé par T_{arrêt} et le mode de conduite à distance caractérisé par T_{arrêt-distance} en diminuant la vitesse du véhicule guidé de sorte que cette dernière soit égale à V₀ -T4 · aₘₐₓ, où V₀ est la vitesse du véhicule guidé en mode de conduite normale, et aₘₐₓ est la valeur absolue de la décélération maximale du véhicule guidé lors d'un freinage d'urgence.

Finalement, un exemple de réalisation et d'application est fourni à l'aide de:

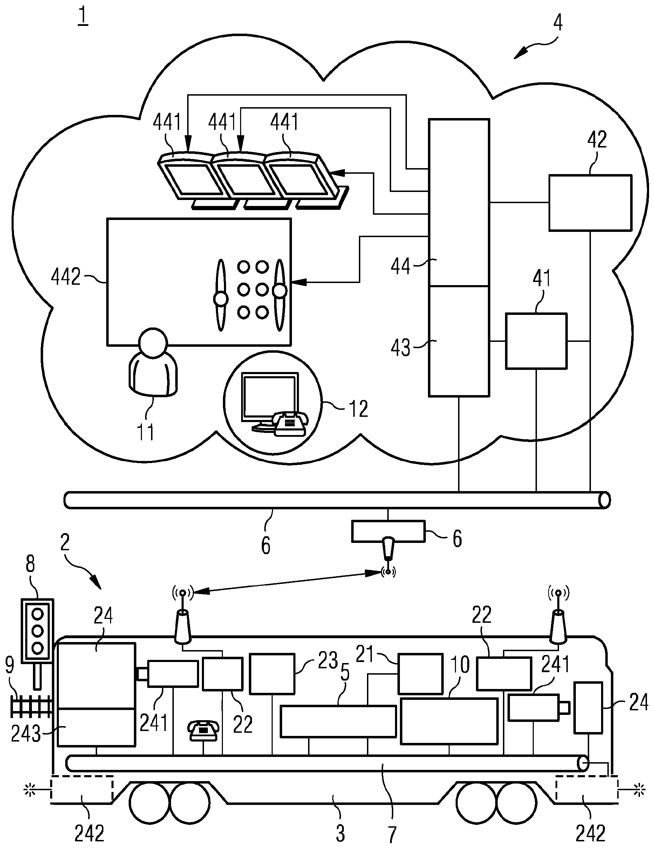

- Figure 1: exemple de réalisation selon l'invention d'un système de gestion d'événement particulier d'un véhicule guidé.

A titre d'exemple, la figure 1 montre un système de gestion 1 d'événement particulier selon l'invention. Le système de gestion 1 comprend en particulier au moins un module de pilotage à distance 2 apte à être embarqué à bord d'un véhicule guidé 3 et un poste de commande à distance 4. Le module de pilotage à distance 2 comprend en particulier un système de commutation 21 d'un mode de conduite du véhicule guidé 3 afin de commuter à distance un mode de conduite normal susceptible d'être mis en oeuvre par un système de pilotage normal (5), à un mode de conduite à distance, et vice versa, un système embarqué de communication 22, un système embarqué de traitement de données de pilotage 23 et des moyens de pilotage à distance 24 aptes à permettre le pilotage du véhicule guidé lors d'un mode de conduite à distance. Le système de commutation 21, le système embarqué de communication 22, le système embarqué de traitement de données de pilotage 23 et les moyens de pilotage à distance 24 sont aptes d'une part à coopérer les uns avec les autres afin de permettre un pilotage à distance du véhicule guidé 3, le pilotage étant commandé manuellement depuis le poste de commande à distance 4, et d'autre part aptes à être connectés notamment les uns avec les autres afin d'assurer une transmission de données de pilotage. En particulier, ils sont chacun aptes à être connectés à un réseau de communication embarqué (7) préexistant du véhicule guidé (3).

Le poste de commande à distance 4 comprend un dispositif de commande à distance 41 du système de commutation 21, un système de communication 42 apte à communiquer avec le système de communication embarqué 22, un système de traitement de données de pilotage 43, et des moyens de commande manuelle à distance 44 aptes à commander les moyens de pilotages à distance 24. Le dispositif de commande à distance 41, le système de communication 42, le système de traitement de données de pilotage 43, et les moyens de commande manuelle à distance 44 sont d'une part aptes à coopérer les uns avec les autres afin de permettre le pilotage manuel à distance, depuis le poste de commande, dudit véhicule guidé 3, et d'autre part aptes à être connectés notamment les uns avec les autres afin d'assurer une transmission de données de pilotage. En particulier, ils sont chacun aptes à être connectés à un réseau de communication au sol (6) d'une ligne de transport.

En particulier, les systèmes embarqués de communication 22 et de communication 42 sont aptes à transmettre des données de pilotage entre le module de pilotage à distance 2 du véhicule guidé 3 et le poste de commande à distance 4 au moyen d'un système radio préexistant du véhicule guidé. En particulier, ledit système radio préexistant est apte à établir un canal de communication permanent entre un réseau d'équipements au sol (6) d'une ligne de transport et des équipements à bord du véhicule guidé, comme par exemple un Pilote Automatique Embarqué (PAE). Ainsi, les communications entre le module de pilotage à distance 2 et le poste de commande à distance 4 sont aptes à utiliser ledit réseau qui avantageusement est apte à communiquer avec un PCC où peut être intégré ledit poste de commande à distance 4 à partir de différents points d'accès radio situés le long de la ligne de transport. De plus, le système embarqué de communication 22 ainsi que le système embarqué de traitement des données de pilotage 23 sont aptes à être connectés à un réseau (7) de communication connectant des équipements à bord du véhicule guidé.

En particulier, les moyens de pilotages à distance 24 comprennent une ou plusieurs caméras de conduite 241. Chaque caméra de conduite 241 est apte à visualiser la voie de transport et une signalisation latérale (8) de ladite voie de transport (9) du véhicule guidé. En particulier, ladite caméra de conduite 241 peut avoir une focale variable et être orientable. En outre, les moyens de pilotages à distance 24 sont aussi susceptibles de comprendre à l'intérieur du véhicule guidé une ou plusieurs caméras de surveillance, aptes à surveiller notamment des passagers du véhicule guidé, ou un fonctionnement d'un équipement du véhicule guidé, tel le fonctionnement d'une porte dudit véhicule guidé. En particulier, une surveillance des portes dudit véhicule guidé est apte à être effectuée par des caméras de surveillance disposées à l'intérieur ou à l'extérieur du véhicule guidé.

Un système embarqué de traitement des données de pilotage 23, lesdites données de pilotage étant par exemple issues de capteurs aptes à équiper les moyens de pilotage à distance 24, est apte à être connecté au réseau (7) du véhicule guidé au moyen d'un protocole de communication de réseau informatique, i.e. via un lien IP (Internet Protocol). Le système embarqué de traitement des données de pilotage 23 est notamment apte à:
- traiter des images issues des caméras de conduite et de surveillance 241;
- traiter des données de pilotage issues d'un télémètre 242 apte à mesurer des distances et compris dans les moyens de pilotage à distance 24, ainsi que des données de pilotage provenant d'autres capteurs éventuels pouvant équiper les moyens de pilotage à distance 24;
- traiter des informations de vitesse;
- mettre en forme les données de pilotage pour leur transmission, notamment au poste de commande à distance 4;
- traiter des données de pilotage issues du poste de commande à distance 4 et transmettre aux moyens de pilotage à distance 24 ou au système de commutation 21 des commandes pouvant résulter du traitement desdites données de pilotage issues du poste de commande à distance 4. Le traitement desdites données de pilotage issues du poste de commande à distance 4 est par exemple apte à donner lieu à une transmission d'un signal apte à commander la focale et l'orientation d'une caméra, ou apte à commander d'autres dispositifs des moyens de pilotages à distance 24;
- stocker des images vidéo durant une période définie;
- gérer une détection d'obstacles en boucle courte.

De plus, les moyens de pilotage à distance 24 peuvent en particulier comprendre un Module Optique de Dynamisation et d'Identification (MODI) 243 spécifique au pilotage à distance dudit véhicule guidé. Le MODI 243 est capable de - comparer temporellement le temps auquel est pris une image vidéo au moyen d'une caméra de conduite 241 ou d'une caméra de surveillance avec le temps auquel est affiché ladite image sur un écran des moyens d'aide au pilotage 441 du poste de commande à distance. Avantageusement, le MODI 243 permet au personnel d'intervention de contrôler un décalage temporel entre l'affichage de données de pilotage et leur collecte par le module de pilotage à distance 2. Le MODI 243 est de plus apte à mesurer le temps écoulé entre le moment de l'activation d'une commande de test des moyens de commande manuelle à distance 44 au poste de commande à distance 4 et l'affichage de son effet sur l'écran des moyens d'aide au pilotage 441. Le MODI 243 est ainsi apte à tester la chaîne de traitement des données de pilotage entre le poste de commande à distance 4 et le module de pilotage à distance 2. - contrôler l'origine d'images prises par des caméras de surveillance ou de conduite 241 en transmettant notamment des données de pilotage relatives au numéro de la caméra et du véhicule guidé.

Le MODI 243 est ainsi apte à garantir l'exactitude d'une correspondance entre des images acquises par les caméras d'un véhicule guidé commandé à distance et les images transmises au poste de commande à distance 4.

Les moyens de pilotage à distance 2 peuvent comprendre en particulier un ensemble d'interphones destinés à transmettre une communication vocale bi-directionnelle entre des passagers situés dans le véhicule guidé et le poste de commande à distance 4. Avantageusement, ledit ensemble d'interphone est apte à assurer une fonction d'interphonie et de sonorisation du véhicule guidé 3 permettant une sonorisation du véhicule guidé, un dialogue interphonique et une écoute discrète du véhicule guidé, complétant avantageusement des informations vidéo fournies par les caméras de surveillance des passagers. En particulier, des interphones peuvent être installés dans chacune des voitures formant une rame. Ils permettent une communication entre un personnel d'intervention situé au poste de commande à distance 4 et des passagers. Le type de communication est par exemple une liaison full duplex entre le poste de commande à distance 4 et le véhicule guidé, ou une rame particulière, suite notamment à un appel du poste de commande à distance 4 ou du véhicule guidé ou de la rame. Les moyens de commande manuelle à distance permettent de plus de sélectionner au moins un haut-parleur du véhicule guidé en écoute discrète.

Avantageusement, lesdits moyens de pilotage à distance 24 peuvent comprendre un capteur de distance ou télémètre 242 destiné à être disposé à l'avant du véhicule guidé. Ledit capteur de distance ou télémètre 242 permet une mesure rapide de la distance entre le véhicule guidé 3 et un obstacle présent sur la voie de transport. Ce capteur de distance ou télémètre 242 peut être relié à une boucle courte interne au véhicule guidé destinée à déclencher un freinage d'urgence en cas de présence d'un obstacle, à l'instar d'une traverse chasse corps. Ladite boucle courte permet avantageusement une réaction rapide du train à un danger imminent indépendamment de retards induits par les communications entre le module de pilotage à distance 2 et le poste de commande à distance 4.

Les moyens de commande manuelle à distance 44 du poste de commande à distance 4 peuvent en particulier comprendre un pupitre de commande 442 comprenant en particulier:
- un bouton de sélection du mode de conduite apte à communiquer au dispositif de commande à distance 41 une commande de commutation du mode de conduite destinée à être transmise au système de commutation 21 du module de pilotage à distance 2;
- des manettes de conduite :
   ∘ de traction ou freinage, comportant en particulier trois positions ou une commande continue;
   ∘ d'une ouverture d'au moins une porte gauche du véhicule guidé;
   ∘ d'une ouverture d'au moins une porte droite du véhicule guidé;
   ∘ de fermeture d'au moins une porte gauche du véhicule guidé;
   ∘ de fermeture d'au moins une porte droite du véhicule guidé;
   ∘ d'inhibition de boucles sécuritaires du véhicule guidé;
- un dispositif de sélection du véhicule guidé;
- des manettes de sélection de caméras (avant, arrière, extérieur, intérieur, etc.) pouvant équiper les moyens de pilotages à distance 24 du module de pilotage à distance 2;
- au moins une manette d'action sur une caméra permettant de visualiser des images enregistrées ou stockées, de zoomer, ou encore d'orienter la caméra;
- un dispositif d'activation et de désactivation d'un essuie glace;
- un dispositif d'allumage et d'extinction de phares du véhicule guidé piloté à distance.

Les moyens d'aide au pilotage 441 comprennent en particulier au moins un écran destiné à afficher des informations utiles pour le pilotage à distance du véhicule guidé, notamment quatre écrans respectivement:
- un premier écran destiné à afficher une vue synthétique de la ligne de transport: la vue synthétique comprend par exemple une ou plusieurs images de synthèse permettant de visualiser sur l'ensemble de la ligne de transport, y compris une partie automatisée d'un garage ou d'un atelier destiné à l'entretien ou l'entreposage du véhicule guidé:
   ∘ un état d'automatismes de la ligne de transport;
   ∘ une position du véhicule guidé, notamment la position et la formation d'une rame et des informations concernant un mouvement du véhicule guidé, notamment desdites rames,
   ∘ un réseau traction;
- un second écran destiné à afficher des images capturées par une caméra de conduite 241 placée à l'avant du véhicule guidé. Avantageusement, ledit écran permet une visualisation d'une image issue de la caméra de conduite 241 située à l'avant du véhicule guidé sélectionné et permet une conduite à distance manuelle basée sur une lecture visuelle par un personnel d'intervention, de l'image affichée sur ledit second écran;
- un troisième écran destiné à l'affichage de voyants d'état du véhicule guidé et de la vitesse du véhicule guidé;
- un quatrième écran destiné à l'affichage d'images prises par une ou plusieurs caméras montées à bord du véhicule guidé, notamment dans des rames et sur les côtés du véhicule guidé. Il s'agit par exemple d'images issues des caméras de surveillance disposées à l'intérieur du véhicule guidé, ainsi que d'images provenant de caméras aptes à être fixées sur des côtés extérieurs ou intérieurs du véhicule guidé et destiné à la surveillance des portes du véhicule guidé.

Le système de traitement des données de pilotage 43 est apte à traiter les données de pilotage issues du module de pilotage à distance 2. Il est en particulier apte à être connecté au réseau (6) de communication entre le véhicule guidé et le sol au moyen d'une connexion IP. Le système de traitement des données de pilotage 43 est en particulier apte à :
- traiter des images vidéo issues de caméras du module de pilotage à distance 2;
- analyser un contenu desdites images vidéo afin d'extraire et mettre en valeur des éléments particuliers lors d'un affichage desdites images. La mise en valeur desdits éléments particuliers permet avantageusement d'avertir le personnel d'intervention d'une présence dudit élément particulier. Lesdits éléments particuliers sont par exemple une signalisation latérale de la voie de transport, des équipements de ladite voie de transport, une présence d'un quai et une identification de station, une présence d'un autre véhicule guidé sur la voie de transport, ou plus généralement, une présence de tout objet inattendu sur présent sur la voie de transport;
- traiter des données issues d'un télémètre 242 et d'autres capteurs éventuels compris dans les moyens de pilotage à distance 24;
- traiter des informations de vitesse du véhicule guidé;
- gérer un affichage sécurisé d'au moins une partie des données de pilotage vers des écrans des moyens d'aide au pilotage 441;
- stocker des images vidéo et des données de pilotage issues du véhicule guidé durant une période d'utilisation du véhicule guidé en mode de conduite à distance.

Les données de pilotage comprennent en particulier des données sécuritaires et des données fonctionnelles pouvant transiter entre le véhicule guidé et le poste de commande à distance. Les données de pilotage sécuritaires provenant du véhicule guidé, notamment du module de pilotage à distance 2, comprennent des informations relatives à:
- un mode de conduite;
- un état des automatismes;
- un état du matériel roulant;
- un signal d'alarme;
- une fermeture et un verrouillage d'une porte, par exemple les portes gauches et/ou droites du véhicule guidé;
- une autorisation de départ.

Les données de pilotage sécuritaires issues du poste de commande à distance 4 et transmises au module de pilotage à distance 2 du véhicule guidé comprennent des informations relatives à:
- un freinage d'urgence;
- une traction ou un freinage;
- une ouverture ou/et une fermeture d'une porte, par exemple l'ouverture des portes droites, l'ouverture des portes gauches, la fermeture des portes droites, la fermeture des portes gauches du véhicule guidé;
- une inhibition de boucles sécuritaire.

Les données de pilotage fonctionnelles issues du poste de commande à distance 4 et transmises au module de pilotage à distance 2 du véhicule guidé comprennent des informations relatives à:
- une commutation du mode de conduite du véhicule guidé, issue du dispositif de commutation à distance 41. En particulier, une commutation en mode de conduite à distance est apte à mettre en marche à distance ledit véhicule guidé. Ainsi, la commutation du mode de conduite du véhicule guidé est en particulier apte à commander une mise sous tension du véhicule guidé. Avantageusement, un mode de conduite du système de commutation (21) correspond à une mise hors tension du véhicule guidé, de sorte que la mise en tension ou la mise hors tension du véhicule guidé soit apte à être commandée à distance depuis le poste de pilotage à distance (4). De plus, et en particulier, au moins un mode de conduite sélectionnable par le système de commutation (21) par commutation du mode de conduite est apte à réinitialiser des équipements du véhicule guidé;

En plus des données de pilotage précitées, les données de pilotage peuvent comprendre des données spécifiques au pilotage à distance, i.e. au mode de conduite à distance, qui peuvent être transmises du véhicule guidé au poste de commande à distance 4. Ce sont par exemple des données de pilotages spécifiques à:
- une image de la voie de transport et à une signalisation de ladite voie de transport;
- une vitesse du véhicule guidé;
- une image issue d'une caméra de surveillance du train;
- un numéro d'identification du véhicule guidé apte à être piloté à distance et d'au moins une de ses caméras actives;
- une phonie du véhicule guidé à distance et des images issues des caméras de surveillance des passagers et des portes.

Ainsi, la présente invention permet, en cas de détection d'un évènement particulier, tel une panne du pilote automatique (10) d'un véhicule guidé automatique, ou une manœuvre d'un véhicule guidé automatique sur un trajet non adapté à ses dispositifs d'automatismes, de piloter manuellement, à distance, ledit véhicule guidé. En particulier, lors de la détection d'un évènement particulier, ladite détection peut être transmise par le véhicule guidé au poste de commande à distance (4). Le personnel d'intervention (11) posté audit poste de commande à distance peut alors sélectionner le véhicule guidé à piloter à distance, et commander, au moyen du dispositif de commande à distance (41) une commutation du mode de conduite normal à un mode de conduite à distance. Le mode de conduite normal, par exemple, un mode de conduite automatique du véhicule guidé libre d'une présence d'un conducteur à bord dudit véhicule guidé et mis en œuvre par un système de pilotage automatique comprenant notamment un pilote automatique embarqué, est alors remplacé par un mode de conduite manuel déporté, i.e. le mode de conduite à distance, géré à distance par ledit personnel d'intervention. Le module de pilotage à distance étant d'une part apte à déporter toutes les fonctions du poste de conduite embarqué du véhicule guidé au poste de commande à distance, et d'autre part à transmettre au poste de commande à distance des données de pilotage permettant un pilotage à distance dudit véhicule guidé, il devient alors possible, pour le personnel d'intervention, de piloter à distance ledit véhicule guidé. Finalement, le dispositif de commande à distance est apte à commander une commutation du système de commutation d'un mode de conduite à distance à un mode de conduite normal, afin que par exemple, le pilote automatique d'un véhicule guidé puisse à nouveau gérer le pilotage du véhicule guidé automatique.

En résumé, la méthode et le système de gestion d'un évènement particulier présentent plusieurs avantages par rapport aux méthodes et dispositifs existant qui nécessitent une intervention du personnel d'intervention sur le lieu d'un évènement particulier. En effet, la méthode et le système de gestion d'un évènement particulier permettent:
- de se libérer d'une intervention du personnel d'intervention à bord du véhicule guidé, sur le lieu de la survenue d'un évènement particulier,
- une commande à distance d'un accostage d'un véhicule guidé automatique ou non automatique: en effet, des capteurs de distance, par exemple au moins un télémètre laser ou une variation de la focale d'une caméra de conduite permettent en particulier un accostage commandable depuis le poste de commande à distance, indépendamment d'une procédure d'accostage automatique qui est désavantageusement lente, dû à une phase d'approche nécessitant une vitesse très réduite du véhicule guidé,
- une conduite à distance en remplacement d'une conduite manuelle à bord du véhicule guidé en cas d'événement particulier, par exemple lors de la survenue d'un incident en exploitation;
- un gain de temps et de personnel: en effet, le temps d'intervention lors d'une panne nécessitant une reprise en mode de conduite manuelle du véhicule est fortement diminué. En effet, le personnel d'intervention n'a plus à se déplacer sur le lieu où se trouve le véhicule guidé en panne. Ceci permet en outre d'éviter un enchaînement d'incidents pouvant être provoqués par l'impatience des passagers (descente sur la voie) et d'améliorer la fluidité du trafic de la ligne;
- d'effectuer une reconnaissance d'une ligne de transport d'un véhicule guidé automatique au démarrage d'une exploitation (début de journée par exemple) afin de garantir la sécurité et la fonctionnalité de la ligne de transport et du véhicule guidé,
- un déplacement du véhicule guidé automatique sur une partie d'une ligne de transport pour laquelle un mode de conduite automatique n'est plus ou pas possible,
- une formation de rames commandées à distance, en zone de garage, en parking, en terminus, ou dans des zones dédiées,
- de scinder manuellement et à distance des rames en zone de garage, en parking, en terminus, dans des zones dédiées,
- un garage à distance d'un véhicule guidé automatique lorsque des zones de garages ne sont pas automatisées,
- de mettre à disposition des véhicules guidés de l'atelier en les commandant à distance,
- une conduite à distance indépendante de la ligne de transport, qu'elle comprenne des zones couvertes (tunnel, garage) ou des zones découvertes,
- une conduite à distance indépendante de l'état de luminosité environnant le véhicule guidé, et indépendante de la météo (pluie, neige, brouillard),
- une reconstitution de l'environnement de conduite (vision de la voie et de son environnement, vision et ambiance sonore de l'intérieur de la rame, commandes disponibles pour la conduite manuelle, alarmes ou surveillances disponibles pour la conduite manuelle) du véhicule guidé déportée au poste de commande à distance,
- de supprimer la redondance d'un pilote automatique embarqué: en effet, un véhicule guidé automatique comprendre généralement deux pilotes automatiques embarqués pour parer à une panne d'un des deux pilotes automatiques embarqués. En cas de panne du pilote embarqué automatique actif, le second pilote embarqué automatique prend le relais afin de gérer le déplacement automatique du véhicule guidé. La présente invention rend cette redondance inutile. En effet, en cas de panne, la conduite du véhicule guidé automatique est assurée par un personnel d'intervention depuis le poste de commande à distance. Le personnel d'intervention peut ainsi conduire le véhicule guidé jusqu'à la prochaine station ou jusqu'à la montée à bord d'un conducteur. En fin de ligne, le poste de commande à distance est apte à déplacer le véhicule guidé jusqu'à un atelier de maintenance pour remplacement du pilote automatique en panne,
- une diminution des coûts liés à une ligne de transport, en supprimant par exemple les pilotes automatiques redondants, ou des équipements d'automatisme de zone d'atelier, le déplacement du véhicule guidé étant apte à être commandé à distance par un personnel d'intervention.

## Revendications

1. Méthode de gestion d'événement particulier comprenant une détection d'au moins un événement particulier capable de perturber un déplacement d'un véhicule guidé (3), et comprenant
- une commutation, commandée à distance, d'un mode de conduite normale à un mode de conduite à distance dudit véhicule guidé (3) lors de la détection dudit événement particulier,
- une mesure et une collecte, en temps réel, de données de pilotage lors du mode de conduite à distance,
- une communication en temps réel desdites données de pilotage entre un module de pilotage à distance (2) dudit véhicule guidé et un poste de commande à distance (4),
- un traitement, en temps réel, desdites données de pilotage,
- un pilotage manuel en temps réel et à distance dudit véhicule guidé (3) lors du mode de conduite à distance, basé sur lesdites données de pilotage,
**caractérisée en ce que** ladite commutation d'un mode de conduite normale à un mode de conduite à distance est réversible et **en ce que** des distances d'arrêt identiques entre le mode de conduite normal et le mode de conduite à distance sont conservées en diminuant la vitesse du véhicule guidé dans le mode de conduite à distance de sorte que cette dernière soit égale à V₀-T4·aₘₐₓ, où V₀ est la vitesse du véhicule guidé en mode de conduite normale, aₘₐₓ est la valeur absolue de la décélération maximale du véhicule guidé lors d'un freinage d'urgence, et T4 est un temps de transmission des données de pilotage au poste de commande à distance, et vice versa, et de traitement desdites données de pilotage, la conservation desdites distances d'arrêt identiques étant mise en œuvre par un système de gestion d'événement comprenant ledit module de pilotage à distance (2) et le poste de commande à distance (4).

2. Système de gestion d'événement particulier (1) apte à mettre en œuvre un pilotage à distance d'un véhicule guidé (3) et comprenant:
- un module de pilotage à distance (2) de véhicule guidé (3) apte à être embarqué à bord du véhicule guidé (3) comprenant un système de pilotage normal (5) destiné au pilotage dudit véhicule guidé (3), ledit module de pilotage à distance (2) étant apte à coopérer avec le système de pilotage normal (5) dudit véhicule guidé, et comprend:
- un système de commutation (21) d'un mode de conduite du véhicule guidé (3), apte à être commandé à distance par un poste de commande à distance (4), afin de commuter à distance un mode de conduite normal à un mode de conduite à distance,
- un système embarqué de communication (22), entre le véhicule guidé (3) et le poste de commande à distance (4), apte à échanger lors du mode de conduite à distance, avec un système de communication (42) dudit poste de commande à distance (4), des données de pilotage,
- un système embarqué de traitement desdites données de pilotage (23) apte à traiter lesdites données de pilotage afin de permettre un pilotage manuel à distance dudit véhicule guidé (3) lors du mode de conduite à distance,
- des moyens de pilotage à distance (24) dudit véhicule guidé (3) aptes à être commandés manuellement par des moyens de commande (44) du poste de commande à distance (4) lors dudit mode de conduite à distance,
- ledit poste de commande à distance (4) du module de pilotage à distance (2) du véhicule guidé (3), ledit poste de commande à distance (4) étant apte à commander à distance le pilotage dudit véhicule guidé (3) au moyen dudit module de pilotage à distance (2), et comprend:
- un dispositif de commande à distance (41) du système de commutation (21) du module de pilotage à distance (2), ledit système de commutation (21) étant apte à commuter ledit mode de conduite normale audit mode de conduite à distance, lors d'une commande issue dudit dispositif de commande à distance (41),
- ledit système de communication (42) entre le véhicule guidé (3) et le poste de commande à distance (4), apte à échanger, lors du mode de conduite à distance, avec ledit système embarqué de communication (22) du module de pilotage à distance (2) dudit véhicule guidé (3), lesdites données de pilotage,
- un système de traitement desdites données de pilotage du véhicule guidé (3) apte à traiter lesdites données de pilotage,
- lesdits moyens de commande manuelle à distance (44) aptes à commander les moyens de pilotage à distance (24) du module de pilotage à distance (2) du véhicule guidé (3) lors du mode de conduite à distance,
**caractérisé en ce que** ledit système de commutation (21) est apte à être commandé à distance par ledit poste de commande à distance (4) afin de commuter à distance d'un mode de conduite à distance à un mode de conduite normal lors d'une commande issue dudit dispositif de commande à distance (41), ledit système de gestion d'événement particulier (1) étant de plus apte à conserver des distances d'arrêt identiques entre le mode de conduite normal et le mode de conduite à distance en diminuant la vitesse du véhicule guidé dans le mode de conduite à distance de sorte que cette dernière soit égale à V₀-T4·aₘₐₓ, où V₀ est la vitesse du véhicule guidé en mode de conduite normale, aₘₐₓ est la valeur absolue de la décélération maximale du véhicule guidé lors d'un freinage d'urgence, et T4 est un temps de transmission des données de pilotage au poste de commande à distance, et vice versa, et de traitement desdites données de pilotage.

3. Système de gestion d'événement particulier (1) selon revendication 2, pour lequel le poste de commande à distance (4) comprend des moyens d'aide au pilotage (441) .

4. Système de gestion d'événement particulier (1) selon une des revendications 2 ou 3 pour lequel le poste de commande à distance (4) est **caractérisé en ce que** les moyens de commande manuelle à distance (44) comprennent un dispositif de sélection de véhicules guidés (3).

5. Système de gestion d'événement particulier (1) selon la revendication 2 **caractérisé en ce que** les données de pilotage comprenant des informations, des commandes et des paramètres relatifs au fonctionnement, au pilotage, et à un environnement externe et interne dudit véhicule guidé (3).

6. Système de gestion d'événement particulier (1) selon une des revendications 2 ou 5 **caractérisé en ce que** le système de traitement des données de pilotage (43) est apte à être connecté à un réseau de communication entre le véhicule guidé et le sol par un lien IP.

7. Système de gestion d'événement particulier (1) selon une des revendications 2 ou 5 **caractérisé en ce que** le système embarqué de traitement des données de pilotage (23) est apte à être connecté au réseau du véhicule guidé par un lien IP.

## Patentansprüche

1. Verfahren zum Management eines besonderen Ereignisses, das eine Erkennung wenigstens eines besonderen Ereignisses umfasst, das in der Lage ist, eine Bewegung eines geführten Fahrzeugs (3) zu stören, und umfasst:
- eine fernbediente Umschaltung von einem normalen Fahrmodus zu einem ferngesteuerten Fahrmodus des geführten Fahrzeugs (3) bei der Erkennung des besonderen Ereignisses,
- eine Messung und ein Sammeln, in Echtzeit, von Steuerungsdaten während des Betriebs im ferngesteuerten Fahrmodus,
- eine Übermittlung, in Echtzeit, der Steuerungsdaten zwischen einem Fernsteuerungsmodul (2) des geführten Fahrzeugs und einer Fernbedienungsstation (4),
- eine Verarbeitung, in Echtzeit, der Steuerungsdaten,
- eine manuelle Steuerung des geführten Fahrzeugs (3) in Echtzeit und aus der Ferne während des Betriebs im ferngesteuerten Fahrmodus, basierend auf den Steuerungsdaten,
**dadurch gekennzeichnet, dass** die Umschaltung von einem normalen Fahrmodus zu einem ferngesteuerten Fahrmodus umkehrbar ist, und dadurch, dass identische Anhaltewege im normalen Fahrmodus und im ferngesteuerten Fahrmodus beibehalten werden, indem die Geschwindigkeit des geführten Fahrzeugs im ferngesteuerten Fahrmodus derart verringert wird, dass diese Letztere gleich V₀-T4·aₘₐₓ ist, wobei V₀ die Geschwindigkeit des geführten Fahrzeugs im normalen Fahrmodus ist, aₘₐₓ der absolute Betrag der maximalen Verzögerung des geführten Fahrzeugs bei einer Notbremsung ist und T4 eine Dauer der Übertragung der Steuerungsdaten an die Fernbedienungsstation und zurück und der Verarbeitung dieser Steuerungsdaten ist, wobei die Beibehaltung der identischen Anhaltewege von einem System zum Management eines Ereignisses durchgeführt wird, welches das Fernsteuerungsmodul (2) und die Fernbedienungsstation (4) umfasst.

2. System zum Management eines besonderen Ereignisses (1), welches geeignet ist, eine Fernsteuerung eines geführten Fahrzeugs (3) durchzuführen, und umfasst:
- ein Fernsteuerungsmodul (2) eines geführten Fahrzeugs (3), welches geeignet ist, an Bord des geführten Fahrzeugs (3) mitgeführt zu werden, das ein normales Steuerungssystem (5) umfasst, das für die Steuerung des geführten Fahrzeugs (3) bestimmt ist, wobei das Fernsteuerungsmodul (2) geeignet ist, mit dem normalen Steuerungssystem (5) des geführten Fahrzeugs zusammenzuwirken, und umfasst:
- ein System zur Umschaltung (21) eines Fahrmodus des geführten Fahrzeugs (3), das geeignet ist, durch eine Fernbedienungsstation (4) ferngesteuert zu werden, um eine fernbediente Umschaltung von einem normalen Fahrmodus zu einem ferngesteuerten Fahrmodus vorzunehmen,
- ein an Bord befindliches System zur Kommunikation (22) zwischen dem geführten Fahrzeug (3) und der Fernbedienungsstation (4), das geeignet ist, während des Betriebs im ferngesteuerten Fahrmodus mit einem Kommunikationssystem (42) der Fernbedienungsstation (4) Steuerungsdaten auszutauschen,
- ein an Bord befindliches System zur Verarbeitung dieser Steuerungsdaten (23), das geeignet ist, die Steuerungsdaten zu verarbeiten, um eine manuelle Fernsteuerung des geführten Fahrzeugs (3) während des Betriebs im ferngesteuerten Fahrmodus zu ermöglichen,
- Mittel zur Fernsteuerung (24) des geführten Fahrzeugs (3), die geeignet sind, während des Betriebs im ferngesteuerten Fahrmodus manuell durch Bedienungsmittel (44) der Fernbedienungsstation (4) bedient zu werden,
- die Fernbedienungsstation (4) des Fernsteuerungsmoduls (2) des geführten Fahrzeugs (3), wobei die Fernbedienungsstation (4) geeignet ist, die Steuerung des geführten Fahrzeugs (3) mittels des Fernsteuerungsmoduls (2) ferngesteuert vorzunehmen, und umfasst:
- eine Vorrichtung zur Fernbedienung (41) des Umschaltsystems (21) des Fernsteuerungsmoduls (2), wobei das Umschaltsystem (21) geeignet ist, bei einem von der Vorrichtung zur Fernbedienung (41) ausgegebenen Befehl von dem normalen Fahrmodus zum ferngesteuerten Fahrmodus umzuschalten,
- das System zur Kommunikation (42) zwischen dem geführten Fahrzeug (3) und der Fernbedienungsstation (4), das geeignet ist, während des Betriebs im ferngesteuerten Fahrmodus mit dem an Bord befindlichen Kommunikationssystem (22) des Fernsteuerungsmoduls (2) des geführten Fahrzeugs (3) die Steuerungsdaten auszutauschen,
- ein System zur Verarbeitung der Steuerungsdaten des geführten Fahrzeugs (3), das geeignet ist, die Steuerungsdaten zu verarbeiten,
- die Mittel zur manuellen Fernbedienung (44), die geeignet sind, die Mittel zur Fernsteuerung (24) des Fernsteuerungsmoduls (2) des geführten Fahrzeugs (3) während des Betriebs im ferngesteuerten Fahrmodus zu bedienen,
**dadurch gekennzeichnet, dass** das Umschaltsystem (21) geeignet ist, durch die Fernbedienungsstation (4) ferngesteuert zu werden, um bei einem von der Vorrichtung zur Fernbedienung (41) ausgegebenen Befehl eine fernbediente Umschaltung von einem ferngesteuerten Fahrmodus zu einem normalen Fahrmodus vorzunehmen, wobei das System zum Management eines besonderen Ereignisses (1) außerdem geeignet ist, identische Anhaltewege im normalen Fahrmodus und im ferngesteuerten Fahrmodus beizubehalten, indem es die Geschwindigkeit des geführten Fahrzeugs im ferngesteuerten Fahrmodus derart verringert, dass diese Letztere gleich V₀-T4·aₘₐₓ ist, wobei V₀ die Geschwindigkeit des geführten Fahrzeugs im normalen Fahrmodus ist, aₘₐₓ der absolute Betrag der maximalen Verzögerung des geführten Fahrzeugs bei einer Notbremsung ist und T4 eine Dauer der Übertragung der Steuerungsdaten an die Fernbedienungsstation und zurück und der Verarbeitung dieser Steuerungsdaten ist.

3. System zum Management eines besonderen Ereignisses (1) nach Anspruch 2, wobei die Fernbedienungsstation (4) Steuerungshilfsmittel (441) umfasst.

4. System zum Management eines besonderen Ereignisses (1) nach einem der Ansprüche 2 oder 3, wobei die Fernbedienungsstation (4) **dadurch gekennzeichnet ist, dass** die Mittel zur manuellen Fernbedienung (44) eine Vorrichtung zur Auswahl geführter Fahrzeuge (3) umfassen.

5. System zum Management eines besonderen Ereignisses (1) nach Anspruch 2, **dadurch gekennzeichnet, dass** die Steuerungsdaten Informationen, Befehle und Parameter umfassen, welche den Betrieb, die Steuerung und eine äußere und innere Umgebung des geführten Fahrzeugs (3) betreffen.

6. System zum Management eines besonderen Ereignisses (1) nach einem der Ansprüche 2 oder 5, **dadurch gekennzeichnet, dass** das System zur Verarbeitung der Steuerungsdaten (43) geeignet ist, durch einen IP-Link mit einem Netz zur Kommunikation zwischen dem geführten Fahrzeug und dem Boden verbunden zu werden.

7. System zum Management eines besonderen Ereignisses (1) nach einem der Ansprüche 2 oder 5, **dadurch gekennzeichnet, dass** das an Bord befindliche System zur Verarbeitung der Steuerungsdaten (23) geeignet ist, durch einen IP-Link mit dem Netz des geführten Fahrzeugs verbunden zu werden.

## Claims

1. Method for managing specific events comprising a detection of at least one specific event that could disturb a movement of a guided vehicle (3), and comprising:
- a remotely controlled switching from a normal driving mode to a remote driving mode of said guided vehicle (3) following detection of said specific event,
- the real-time measurement and collection of piloting data in the remote driving mode,
- the real-time communication of said piloting data between a remote piloting module (2) of said guided vehicle and a remote control station (4),
- the real-time processing of said piloting data,
- the real-time manual and remote piloting of said guided vehicle (3) in remote driving mode, on the basis of said piloting data,
**characterised in that** said switching from a normal driving mode to a remote driving mode is reversible and **in that** identical stopping distances between the normal driving mode and the remote driving mode are retained by reducing the speed of the guided vehicle in the remote driving mode such that this latter is equal to V₀-T4·aₘₐₓ, where V₀ is the speed of the guided vehicle in the normal driving mode, aₘₐₓ is the absolute value of the maximum deceleration of the guided vehicle during emergency braking and T4 is a time for transmitting the piloting data to the remote control station, and vice versa, and processing said piloting data, the retention of said identical stopping distances being implemented by a specific-event management system comprising said remote piloting module (2) and the remote control station (4).

2. Specific-event management system (1) capable of implementing the remote piloting of a guided vehicle (3) and comprising:
- a remote piloting module (2) of a guided vehicle (3) installable on board the guided vehicle (3) comprising a normal piloting system (5) intended to pilot said guided vehicle (3), said remote piloting module (2) being able to cooperate with the normal piloting system (5) of said guided vehicle, and comprising:
- a switching system (21) of a driving mode of the guided vehicle (3) that is remotely controllable by a remote control station (4), in order to remotely switch a normal driving mode to a remote driving mode,
- an on-board communication system (22), between the guided vehicle (3) and the remote control station (4), that can exchange piloting data in the remote driving mode with a communication system (42) of said remote control station (4),
- an on-board system for processing said piloting data (23) that is able to process said piloting data to enable the remote manual piloting of said guided vehicle (3) in the remote driving mode,
- means (24) for remotely piloting said guided vehicle (3) that can be controlled manually using control means (44) of the remote control station (4) in said remote driving mode,
- said remote control station (4) of the remote piloting module (2) of the guided vehicle (3), said remote control station (4) being able to remotely control the piloting of said guided vehicle (3) using said remote piloting module (2), and comprising:
- a remote control device (41) of a switching system (21) of the remote piloting module (2), said switching system (21) being able to switch said normal driving mode to said remote driving mode following a command issued from said remote control device (41),
- said communication system (42) between the guided vehicle (3) and the remote control station (4), that can exchange said piloting data in the remote driving mode with said on-board communication system (22) of the remote piloting module (2) of said guided vehicle (3),
- a system for processing said piloting data of the guided vehicle (3) that can process said piloting data,
- said remote manual control means (44) able to control the remote piloting means (24) of the remote piloting module (2) of the guided vehicle (3) in the remote driving mode,
**characterised in that** said switching system (21) is controllable remotely by said remote control station (4), in order to switch remotely from a remote driving mode to a normal driving mode following a command issued from said remote control device (41), said specific-event management system (1) also being able to retain identical stopping distances between the normal driving mode and the remote driving mode by reducing the speed of the guided vehicle in the remote driving mode such that this latter is equal to V₀-T4·aₘₐₓ, where V₀ is the speed of the guided vehicle in normal driving mode, aₘₐₓ is the absolute value of the maximum deceleration of the guided vehicle during emergency braking and T4 is a time for transmitting the piloting data to the remote control station, and vice versa, and processing said piloting data.

3. Specific-event management system (1) according to claim 2, for which the remote control station (4) comprises assisted-piloting means (441).

4. Specific-event management system (1) according to one of claims 2 or 3, for which the remote control station (4) is **characterised in that** the remote manual control means (44) comprise a guided-vehicle selection device (3).

5. Specific-event management system (1) according to claim 2, **characterised in that** the piloting data comprises information, commands and parameters relating to the operation, piloting and an external and internal environment of said guided vehicle (3).

6. Specific-event management system (1) according to one of claims 2 or 5, **characterised in that** the piloting-data processing system (43) can be connected to a communication network between the guided vehicle and the ground using an IP link.

7. Specific-event management system (1) according to one of claims 2 or 5, **characterised in that** the on-board piloting-data processing system (23) can be connected to the network of the guided vehicle using an IP link.
